# EUROPEAN PATENT SPECIFICATION

(11) **EP 1 894 464 B1**
(45) Date of publication and mention of the grant of the patent: **07.04.2010**
(21) Application number: 07075728.1
(22) Date of filing: 29.08.2007
(51) Int. Cl.: A01D 45/26

(54) **Deivce for harvesting vegetable plants, in particular broccoli**
Vorrichtung zum Ernten von Gemüse, insbesondere Broccoli
Dispositif pour la cueillette de plantes légumes, en particulier de brocolis

(30) Priority: 04.09.2006 NL 1032421
(43) Date of publication of application: 05.03.2008
(73) Proprietor: Tumoba B.V., 2991 VC Barendrecht (NL)
(72) Inventor: Molenaar, Hendrik Willem, 2992 HN Barendrecht (NL)
(74) Representative: Reynvaan, Lambertus Johannes

(56) References cited:
- EP-A- 0 502 789
- NL-C1- 1 028 865
- US-A- 3 690 049

## Description

The present invention relates to a device for harvesting vegetable plants, in particular broccoli.

A device for harvesting vegetable plants, in particular broccoli, is disclosed in the Applicant's Dutch Patent 1028865. In the case of this device the vegetable plants cut off close to the ground are transported after cutting between two parallel conveyor belts, which turn the cut vegetable plant over through 180°, so that said vegetable plants fall onto a conveyor element provided below them and are taken away by means of said conveyor element. The present invention must be regarded as a further development of this device disclosed in NL 1028865.

A broccoli plant is composed of a stem having the flower head on the end, a single ring of leaves being present around the stem. Said ring of leaves is therefore clamped along with the stem between the conveyor belts after the plant has been cut off close to the ground. When the broccoli plant has been clamped upside down with its stem and the leaves between the conveyor belts and is cut off at the desired length, the leaves together with the flower head of the broccoli will fall onto the conveyor element below said conveyor belts. After this, the flower heads of the broccoli therefore have to be separated from the leaves. In practice, the flower heads of the broccoli are taken away from between the leaves by hand. This is labour-intensive work and incurs the risk of broccoli parts that are suitable for consumption being taken away with the leaves.

It is therefore an object of the present invention to improve this known harvesting machine in such a way that the vegetable plants, after being cut off close to the ground, are processed to products suitable for consumption, i.e. the leaves are stripped off the plants and the stem is cut to the desired length.

This object is achieved according to the invention in that a leaf-cutting device is provided near the conveyor belts, which leaf-cutting device comprises cutting blades for cutting off the leaves around the stem, below the leaf-cutting device a removal belt being provided for taking away the cut-off leaves falling upon it and, viewed in the direction of movement of the conveyor belts, downstream of the leaf-cutting device, below the conveyor belts a cutting device being provided for fully severing the stem of the vegetable plant, and below said cutting device a following removal belt (11) being provided for taking away the cut-off vegetable plant. In this way the leaves and the consumable part of the vegetable plant are cut off and taken away separately, so that separation of these parts later is no longer necessary.

According to the invention, the leaf-cutting device comprises two circular rotary cutting blades situated below the conveyor belts, each cutting blade having at some distance from the cutting edge a concentric stop edge for limiting the depth of cut and, viewed in the direction of forward movement of the conveyor belts, disposed one behind the other, each being at the end of an arm which can swing in the horizontal plane by means of a pivot pin mounted in the frame, which arms are connected to each other and are under spring pressure, so that said arms together, through the pressure of the clamped vegetable plant, perform a movement around the stem of the vegetable plant. The rotary cutting blades are in this way moved against the pressure of a spring through the clamped vegetable plant.

According to an expedient embodiment of the invention, viewed in the direction of movement of the conveyor belts, an aligning element is provided upstream of the leaf-cutting device, which aligning element serves to align the clamped vegetable plants in such a way that said vegetable plants project by a desired distance below the conveyor belts. By means of this aligning element, the clamped plants are aligned in such a way that when the stem is severed pieces of broccoli suitable for consumption with approximately the same stem lengths are always obtained.

The invention is explained in greater detail with reference to the appended drawing, in which:
Figure 1 shows diagrammatically a view of a part of the harvesting device according to the invention;
Figure 2 is a diagrammatic cross section of the conveyor belts along the line II - II in Figure 1, which shows a clamped broccoli plant and the leaf-cutting device;
Figure 3 shows diagrammatically a perspective view of the leaf-cutting device according to the invention;
Figure 4 shows a perspective top view of the leaf-cutting device, and
Figures 5a - 5c show a number of successive working positions of the leaf-cutting device according to Figures 2, 3 and 4.

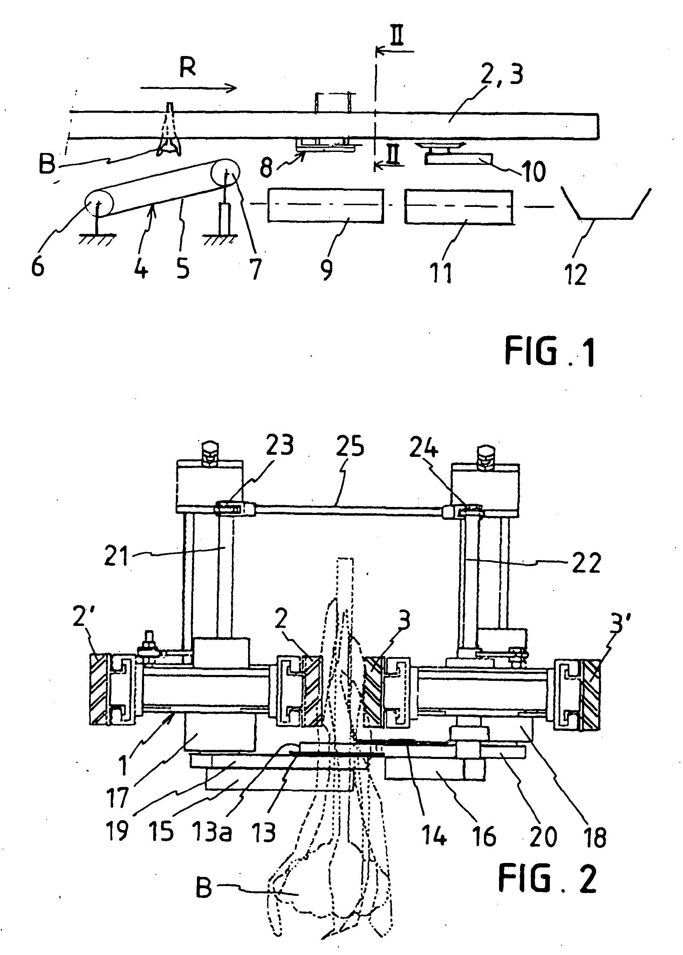

Fig. 1 shows a diagrammatic view of a part of the harvesting device according to the invention, in which a part of the conveyor belts 2, 3 of the harvesting device disclosed in the Applicant's Dutch patent specification 1028865 is shown, the content of which specification is included here by reference. In this illustrated stretch of the conveyor belts the broccoli plants B cut off close to the ground are clamped and turned over through 180°, these plants projecting below said conveyor belts over some distance. The conveyor belts move in the direction of the arrow R and carry along the cut-off broccoli plant B. The broccoli plant consists of a stem having on the end a head formed by the flower, while around the stem a single ring of leaves is present, which leaves extend from the vicinity of the cut-off end of the stem until possibly beyond the flower head. The broccoli plant carried along by the conveyor belts first passes an aligning element, disposed below the conveyor belts and indicated in its entirety by reference numeral 4. Said aligning element is composed of an endless driven belt 5 extending in the direction of movement of the conveyor belts, which driven belt runs over two pulleys 6 and 7, the distance of which from the underside of the conveyor belts is adjustable. The pulleys 6 and 7 are adjusted in such a way that the distance from the belt part 5a facing the conveyor belts to the conveyor belts decreases gradually in the direction of movement of the belt 5. The belt 5 is driven in such a way that the belt part 5a facing the conveyor belts has a horizontal speed component that is equal to the speed of the horizontal conveyor belts. When the clamped broccoli plants therefore run with the flower head against the belt part 5a, said belt part running along with the conveyor belts presses said broccoli plants towards the conveyor belts over a distance that is adjustable as desired, so that when leaving the belt part 5a said plants are all at virtually the same distance from the conveyor belts, which distance is equal to the shortest distance of the belt 5a from the conveyor belts. In other words, the broccoli plants therefore all project the same distance beyond the conveyor belts. The clamping of the broccoli plants in this region is such that the broccoli plants can slide between the conveyor belts.

After leaving the aligning element, the broccoli plants go to the vicinity of a leaf-cutting device, which is indicated in its entirety by reference numeral 8. Said leaf-cutting device severs the leaves present along the stem in a manner to be described in further detail below, so that said leaves fall down and fall onto a removal belt 9 provided below them. Said belt 9 takes away the leaves in a direction approximately perpendicular to the direction of movement of the conveyor belts, so in this case perpendicular to the plane of drawing.

After the leaf-cutting device, the broccoli plant goes to a cutting element 10, where the stem of the broccoli plant is severed completely, with the result that the broccoli plant falls down onto a removal belt 11, which like the removal belt 9 is directed perpendicularly to the plane of drawing. At the end of the conveyor belts, the remaining part of the broccoli plant clamped between the conveyor belts falls down into a collection container 12 provided below this end.

Since the leaves of the broccoli plant are first cut off and taken away and the broccoli plant itself is then cut off, said leaves and broccoli plant can be taken away separately, so that manual separation of the leaves and the consumable broccoli will not be necessary. The aligning element 4 in this case ensures that the consumable broccoli parts all have substantially the same stem lengths.

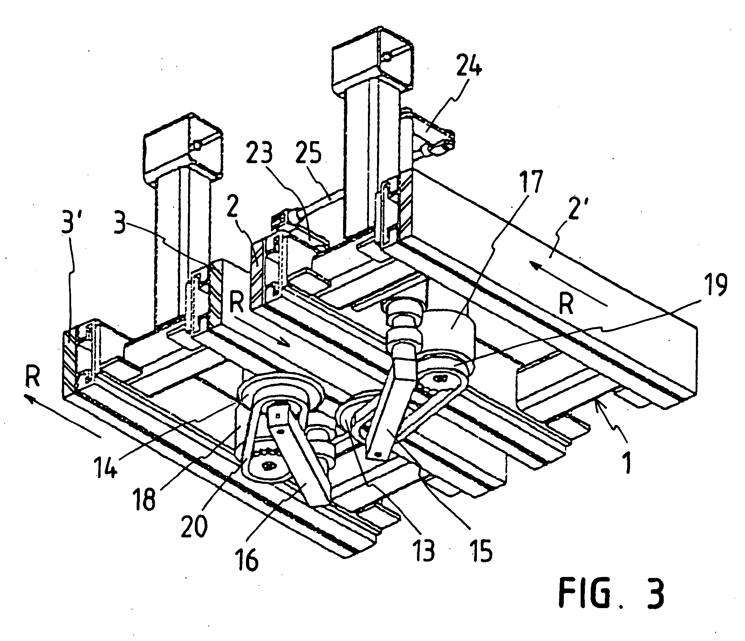

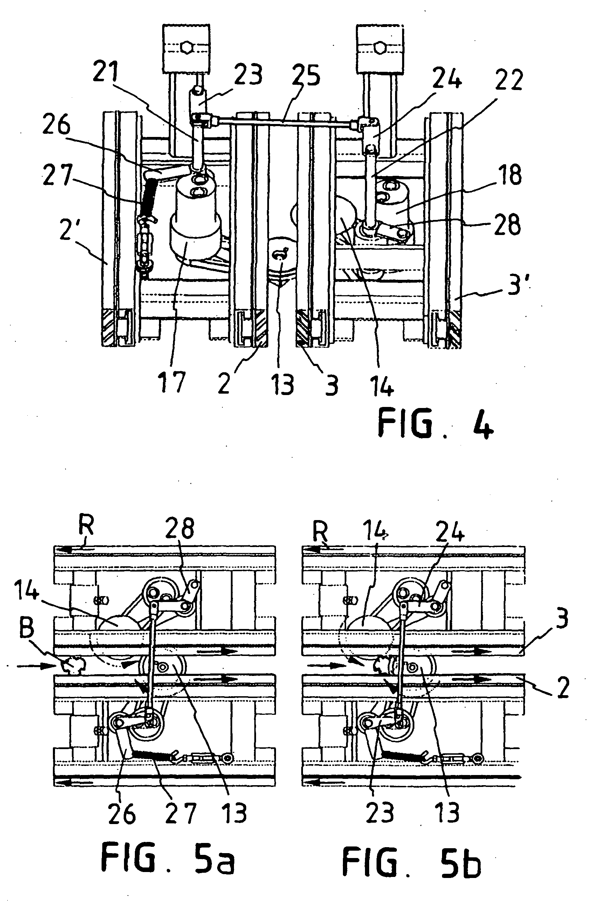

The leaf-cutting device will be described in greater detail below with reference to Figures 2, 3 and 4. Fig. 2 shows a cross section of the part of conveyor belts visible in Figure 1, along the line II - II in Figure 1, with a broccoli plant B clamped between said belts. Figure 3 shows a perspective bottom view of the leaf-cutting device in its idle position, and Figure 4 shows a perspective top view of the leaf cutting device in the idle position. These figures show a frame 1 with the two horizontally running conveyor belts 2, 3 situated parallel to and at a distance from each other, between which conveyor belts in Figure 2 broccoli plant B (indicated by dashed lines) is clamped in a position turned through 180°. These figures also show the returning parts 2', 3' of the conveyor belts. The directions of movement of the conveyor belt parts are indicated by arrows R in Figures 3 and 4.

The leaf-cutting device comprises two circular cutting blades 13, 14, each mounted on the end of the bearing arm 15, 16 respectively. Each bearing arm also bears a drive motor 17, 18 respectively, which drives the cutting blade concerned in a rotary manner by means of a belt or chain 19, 20 respectively. Each rotating arm is non-rotatably connected to a pivot pin 21, 22, which is rotatably mounted in the frame 1 and extends vertically upwards until above the conveyor belts 2, 3. The top end of each of the two pivot pins is non-rotatably connected to a crossbar 23, 24 respectively, said two crossbars being connected to each other by means of a connecting rod 25, which is fixed so as to pivot on the end of each crossbar, so that the two arms 15 and 16 on which the blades 13 and 14 are mounted together can perform a swinging movement. The connection of the two pivot pins is made in such a way that the pivot pins rotate simultaneously in opposite directions. Furthermore, the length of the connecting rod is adjustable, so that the distance between the two cutting blades can be adjusted as desired.

As is visible in Figure 4, the pivot pin 21 is provided with a side arm 26, which on the end is connected to a helical spring 27, the other end of which is connected to the fixed frame 1. The other pivot pin 22 has a stop lug 28, which in the idle position of the two arms is pressed by said helical spring against the frame, and in this way determines the initial or rest position of the leaf-cutting device.

The two rotating circular cutting blades 13, 14 are each, at some distance from the circumference forming the cutting edge, provided with a concentrically upstanding stop 13a (Fig. 2), which determines the cutting depth of the blades. Furthermore, the arrangement of the rotating cutting blades is such that, viewed in the direction of movement of the conveyor belts, said cutting blades are situated one behind the other, each on one side of the gap defined by the conveyor belts.

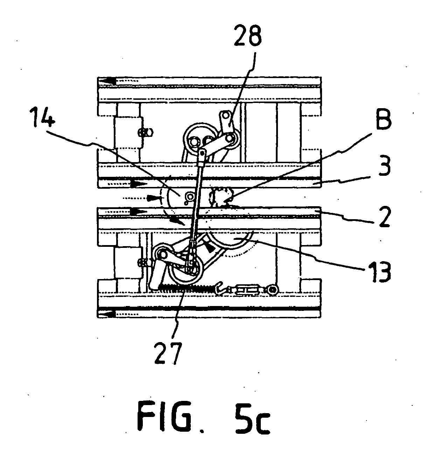

The mode of operation of the leaf-cutting device will be explained below with reference to Figures 5a - 5c. Figure 5a shows the idle position of the cutting device, in which the stop lug 28 is pressed by the helical spring 27 against the frame 1. In this position the front blade 14 projects a slight distance into the gap defined between the conveyor belts, while the back blade 13 lies virtually in the centre of the gap, i.e. bridges the full width of the gap. The oncoming broccoli plant B is therefore cut into along the side by the first blade 14, and then goes against the back blade, which cuts into the front of the plant. Fig. 5b shows the situation in which the rotating blades again take up the same position as that shown in Fig. 5a. Since the cutting depth of the cutting blades is limited by their upstanding stop, the plant now presses the back blade 13 backwards (Fig. 5c), with the result that said blade swings clockwise about the pivot pin 21 and comes to rest at the side of the gap, the side of the plant being cut in the process. This swinging at the same time causes the other pivot pin 22 to rotate anticlockwise, so that the front blade 14 goes further into the gap and cuts into the rear side of the plant (Fig. 5c). In this way a cut is made all the way round the plant by the two blades, with the result that the leaves of the plant come off and fall down onto the removal belt 9, without the stem of the plant being severed completely.

When the plant has then passed the back blade, the arms as a result of the helical spring 28 will be moved back to the idle position of Fig. 5a, awaiting the following plant to be processed.

It will be clear that the invention is not limited to the embodiment illustrated and described here, but that within the scope of the appended claims a large number of variations and modifications will be obvious to the person skilled in the art.

## Claims

1. Device for harvesting vegetable plants, in particular broccoli, comprising a fixed frame with two parallel conveyor belts, which clamp between them and carry along the cut-off vegetable plants, the conveyor belts comprising a substantially horizontal stretch where the vegetable plants are turned over through 180° and project on the under side of the conveyor belts, which vegetable plants have a stem around which a ring of leaves is present, **characterized in that** a leaf-cutting device (8) is provided near the conveyor belts (2, 3), which leaf-cutting device comprises cutting blades (13, 14) for cutting off the leaves around the stem, below the leaf-cutting device a removal belt (9) being provided for taking away the cut-off leaves falling upon it and, viewed in the direction of movement of the conveyor belts, downstream of the leaf-cutting device, below the conveyor belts a cutting device (10) being provided for fully severing the stem of the vegetable plant, and below said cutting device a following removal belt (11) being provided for taking away the cut-off vegetable plant.

2. Device according to Claim 1, **characterized in that** the leaf-cutting device comprises two circular rotary cutting blades (13, 14) below the conveyor belts, each cutting blade having at some distance from the cutting edge a concentric stop edge for limiting the depth of cut and, viewed in the direction of forward movement of the conveyor belts, being disposed one behind the other, each being at the end of an arm (15, 16) which can swing in the horizontal plane by means of a pivot pin (21, 22) mounted in the frame (1), which arms are connected to each other and are under spring pressure, so that said arms together, through the pressure of the clamped vegetable plant, perform a movement around the stem of the vegetable plant.

3. Device according to Claim 2, **characterized in that** the pivot pins (21, 22) of the arms (15 and 16) lie on either side of the gap formed by the conveyor belts (2, 3), and are connected by means of a connecting rod (26) in such a way that said pivot pins rotate in opposite directions to each other.

4. Device according to Claim 2 or 3, **characterized in that** the cutting blades do not lie in the same plane, and the upstanding concentric stop edges of the two blades face each other.

5. Device according to the preceding Claims 2-4, **characterized in that** the length of the connecting rod (26) is adjustable for setting the position of the cutting blades relative to each other.

6. Device according to Claim 1, **characterized in that** viewed in the direction of movement of the conveyor belts, an aligning element (4) is provided upstream of the leaf-cutting device, which aligning element serves to align the clamped vegetable plants in such a way that said vegetable plants project by a desired distance below the conveyor belts.

7. Device according to Claim 6, **characterized in that** the aligning element is composed of an endless driven belt (5) provided below the conveyor belts and extending in the direction of movement of the conveyor belts, which driven belt is guided over two pulleys (6,7), the distance of said pulleys from the underside of the conveyor belts being adjustable, and the belt part (5a) facing the conveyor belts having in the direction parallel to the conveyor belts a speed component that is equal to the speed of the conveyor belts (2, 3).

## Patentansprüche

1. Vorrichtung für das Ernten von Gemüsepflanzen, insbesondere Brokkoli, die einen festen Rahmen mit zwei parallelen Förderbändern umfasst, die zwischen sich die abgeschnittenen Gemüsepflanzen festklemmen und mitführen, wobei die Förderbänder eine im Wesentlichen horizontale Erstreckung aufweisen, wo die Gemüsepflanzen um 180° herumgedreht werden und an der Unterseite der Förderbänder vorstehen, wobei die Gemüsepflanzen einen Stängel aufweisen, um den ein Ring aus Blättern vorhanden ist, **dadurch gekennzeichnet, dass** eine Blattabschneidevorrichtung (8) nahe der Förderbänder (2, 3) vorgesehen ist, wobei die Blattabschneidevorrichtung Schneidklingen (13, 14) für das Abschneiden der Blätter um den Stängel herum umfasst, wobei unter der Blattabschneidevorrichtung ein Abfuhrband (9) vorgesehen ist, um die abgeschnittenen Blätter, die darauf fallen, fortzuschaffen, in der Bewegungsrichtung der Förderbänder gesehen und stromabwärts von der Blattabschneidevorrichtung unterhalb der Förderbänder eine Schneidevorrichtung (10) für das vollständige Durchtrennen des Stängels der Gemüsepflanze vorgesehen ist, und unterhalb besagter Schneidevorrichtung ein nachfolgendes Abfuhrband (11) vorgesehen ist, um die abgeschnittenen Gemüsepflanzen fortzuschaffen.

2. Vorrichtung gemäß Anspruch 1, **dadurch gekennzeichnet, dass** die Blattabschneidevorrichtung zwei kreisförmige rotierbare Schneidklingen (13, 14) unterhalb der Förderbänder umfasst, wobei jede Schneidklinge in einem gewissen Abstand von der Schneidkante eine konzentrische Anschlagkante für das Begrenzen der Tiefe des Schnitts aufweist und, in der Richtung der Vorwärtsbewegung der Förderbänder gesehen, eine hinter der anderen angeordnet ist, wobei jede an dem Ende eines Arms (15, 16) angebracht ist, der sich in der horizontalen Ebene mittels eines Schwenkstifts (21, 22), der in den Rahmen (1) montiert ist, schwingen kann, wobei die Arme miteinander verbunden und unter Federdruck sind, so dass die besagten Arme gemeinsam durch den Druck der geklemmten Gemüsepflanze eine Bewegung um den Stängel der Gemüsepflanze durchführen.

3. Vorrichtung gemäß Anspruch 2, **dadurch gekennzeichnet, dass** die Schwenkstifte (21, 22) der Arme (15 und 16) auf beiden Seiten des Spalts, der von den Förderbändern (2, 3) gebildet ist, liegen und mittels einer Verbindungsstange (26) auf solch eine Weise verbunden sind, dass die Schwenkstifte in zueinander entgegen gesetzte Richtungen rotieren.

4. Vorrichtung gemäß einem der Ansprüche 2 oder 3, **dadurch gekennzeichnet, dass** die Schneidklingen nicht in derselben Ebene liegen und die nach oben stehenden konzentrischen Anschlagkanten der zwei Klingen einander gegenüberliegen.

5. Vorrichtung gemäß der vorhergehenden Ansprüche 2 bis 4, **dadurch gekennzeichnet, dass** die Länge der Verbindungsstange (26) einstellbar ist, um die Position der Schneidklingen relativ zueinander festzulegen.

6. Vorrichtung gemäß Anspruch 1, **dadurch gekennzeichnet, dass** in Richtung der Bewegung der Förderbänder gesehen stromaufwärts von der Blattabschneidevorrichtung ein Ausrichtelement (4) vorgesehen ist, wobei das Ausrichtelement dazu dient, die geklemmten Gemüsepflanzen in so einer Weise auszurichten, dass die besagten Gemüsepflanzen um einen gewünschte Strecke unter den Förderbändern vorstehen.

7. Vorrichtung gemäß Anspruch 6, **dadurch gekennzeichnet, dass** das Ausrichtelement aus einem endlosen, angetriebenen Band (5) gebildet ist, das unter den Förderbändern vorgesehen ist und sich in der Richtung der Bewegung der Förderbänder erstreckt, wobei das angetriebene Band über zwei Umlenkrollen (6, 7) geführt ist, der Abstand von den besagten Umlenkrollen von der Unterseite der Förderbänder einstellbar ist, und der Bandteil (5a), der den Förderbändern gegenüberliegt, in der Richtung parallel zu den Förderbändern eine Geschwindigkeitskomponente hat, die gleich der Geschwindigkeit der Förderbänder (2, 3) ist.

## Revendications

1. Dispositif pour la récolte de plantes végétales, en particulier de brocolis, comprenant un cadre fixe avec deux courroies de convoyeur parallèles, qui se fixent entre elles et transportent des plantes végétales coupées, les courroies de convoyeur comprenant un étirement sensiblement horizontal où les plantes végétales sont retournées sur 180° et se projettent sur le côté inférieur des courroies de convoyeur, lesdites plantes végétales ayant une tige autour de laquelle un anneau de feuilles est présent, **caractérisé en ce qu'**un dispositif de découpe de feuille (7) est fourni près des courroies de convoyeur (2, 3), ledit dispositif de découpe de feuille comprenant des lames de coupe (13, 14) pour couper les feuilles autour de la tige, une courroie d'enlèvement (9) sous le dispositif de découpe de feuille étant ménagée pour enlever les feuilles coupées qui tombent dessus et, en regardant dans le sens du mouvement des courroies de convoyeur, en aval du dispositif de découpe de feuille, un dispositif de découpe (10) étant fourni sous les courroies de convoyeur, pour sectionner totalement la tige de la plante végétale et une courroie d'enlèvement suivante (11) étant fournie sous ledit dispositif de coupe, pour enlever la plante végétale découpée.

2. Dispositif selon la revendication 1, **caractérisé en ce que** le dispositif de découpe de feuille comprend deux lames de coupe rotatives circulaires (13, 14) sous les courroies de convoyeur, chaque lame de coupe ayant, à une certaine distance du bord de coupe, un bord d'arrêt concentrique pour limiter la profondeur de coupe et, en regardant dans le sens du mouvement avant des courroies de convoyeur, disposées l'une derrière l'autre, chacune étant à l'extrémité d'un bras (15, 16) qui peut osciller dans le plan horizontal au moyen d'une broche de pivot (21, 22) montée dans le cadre (1), lesdits bras étant reliés l'un à l'autre et étant sous la pression d'un ressort, de sorte que lesdits bras ensemble, par la pression de la plante végétale fixée, effectuent un mouvement autour de la tige de la plante végétale.

3. Dispositif selon la revendication 2, **caractérisé en ce que** les broches de pivot (21, 22) des bras (15 et 16) se situent de chaque côté de l'intervalle formé par les courroies de convoyeur (2, 3) et sont reliées au moyen d'une tige de connexion (26), de sorte que lesdites broches de pivot tournent dans des directions opposées l'une à l'autre.

4. Dispositif selon les revendications 2 ou 3, **caractérisé en ce que** les lames de coupe ne se trouvent pas dans le même plan, et les bords d'arrêt concentriques verticaux des deux lames sont l'un en face de l'autre.

5. Dispositif selon les revendications 2-4, **caractérisé en ce que** la longueur de la tige de connexion (26) est réglable pour régler la position des lames de coupe l'une par rapport à l'autre.

6. Dispositif selon la revendication 1, **caractérisé en ce que**, en regardant dans le sens du mouvement des courroies de convoyeur, un élément d'alignement (4) est fourni en amont du dispositif de découpe de feuille, ledit élément d'alignement sert à aligner les plantes végétales fixées, de sorte que lesdites plantes végétales se projettent sur une distance souhaitée sous les courroies de convoyeur.

7. Dispositif selon la revendication 6, **caractérisé en ce que** l'élément d'alignement est composé d'une courroie menée sans fin (5), ménagée sous les courroies de convoyeur et s'étendant dans le sens du mouvement des courroies de convoyeur, ladite courroie menée étant guidée sur deux poulies (6, 7), la distance desdites poulies par rapport au côté inférieur des courroies de convoyeur étant réglable, et la partie de courroie (5a), faisant face aux courroies de convoyeur ayant dans la direction parallèle aux courroies de convoyeur, un composant de vitesse qui est égal à la vitesse des courroies de convoyeur (2, 3).
